# EUROPÄISCHE PATENTANMELDUNG

(11) **EP 4 588 644 A1**
(43) Veröffentlichungstag der Anmeldung: **23.07.2025**
(21) Anmeldenummer: 25150663.0
(22) Anmeldetag: 08.01.2025
(51) Int. Cl.: B29C 55/20, B29C 55/02

(54) **MESSKLUPPENEINHEIT UND RECKANLAGE**

(30) Priorität: 19.01.2024 DE 102024101555
(71) Anmelder: Brückner Maschinenbau GmbH, 83313 Siegsdorf (DE)
(72) Erfinder: Hofmann, Thomas, 83355 Grabenstätt (DE); Douzhyk, Andrei, 83313 Siegsdorf (DE); Barth, Silvio, 83313 Siegsdorf (DE); Lachner, Kilian, 83301 Traunreut (DE)
(74) Vertreter: Flach Bauer & Partner Patentanwälte mbB

(57) **Zusammenfassung**

Die vorliegende Erfindung betrifft eine Messkluppeneinheit 100 sowie eine Reckanlage, insbesondere eine Quer-, Längs- und/oder Simultan-Reckanlage 10. Die Messkluppeneinheit umfasst einen Grundkörper 110, zumindest ein Führungselement und zumindest eine Klemmvorrichtung 130. Die Klemmvorrichtung 130 ist am Grundkörper 110 angeordnet und zum Klemmen einer Materialbahn 12 eingerichtet. Das Führungselement ist am Grundkörper 110 angeordnet und dazu eingerichtet, die Messkluppeneinheit 100 auf einer Führungsschiene zu führen. Weiterhin umfasst die Messkluppeneinheit 100 eine Sensorvorrichtung 300, die dazu eingerichtet ist Messdaten während des Betriebs der Messkluppeneinheit 100 in einer Reckanlage 10 zu erfassen.

## Beschreibung

### Gebiet der Erfindung

Die vorliegende Erfindung betrifft eine Messkluppeneinheit zur Erfassung von Messdaten während des Betriebs einer Reckanlage, eine Reckanlage sowie ein Verfahren zur Erfassung von Messdaten in einer Reckanlage.

### Hintergrund

Reckanlagen finden insbesondere bei der Herstellung von Kunststofffolien Anwendung. Üblicherweise wird in solchen Anlagen die zu reckende Materialbahn, in der Regel eine Kunststofffolie, mittels Kluppeneinheiten erfasst und durch die Reckanlage bewegt. Die Kluppeneinheiten sind auf umlaufenden Führungsschienen geführt und verfahrbar angeordnet und werden zentral oder einzeln angetrieben.

Während des eigentlichen Reckvorgangs wirken große Kräfte auf die Kluppeneinheiten, sodass diese äußerst hohen Belastungen und somit Verschleiß ausgesetzt sind. Daher werden besondere Belastungsanforderungen an die Kluppeneinheiten gestellt.

Ein weiterer wichtiger Bestandteil einer Reckanlage ist das sogenannte Transportsystem, das u.a. die Führungsschienen und ein Antriebssystem umfasst. Jedenfalls die Führungsschienen befinden sich ganz oder teilweise in einem Ofen. Dies ermöglicht die Materialbahn (insbesondere Kunststofffolie) vor und/oder während dem Verstrecken zu temperieren (insbesondere aufzuheizen, oder auf einer gewünschten Temperatur zu halten).

Die umlaufenden Führungsschienen führen die Kluppeneinheiten auf einer Bewegungsbahn. Das/ die Antriebssysteme treiben die Kluppeneinheiten auf den Führungsschienen an. Hierzu können die Kluppeneinheiten Kettenglieder umfassen und/oder über Kettenglieder miteinander zu einem Kettenstrang verbunden sein.

Um eine möglichst störungsfreie Reckung der Materialbahn zu erreichen, ist es u.a. wichtig, dass die Reibung zwischen der Führungsschiene und den Kluppeneinheiten möglichst klein und gleichmäßig ist. In der Realität schwankt die Reibung allerdings lokal. Diese Schwankungen sind auf unterschiedliche Einflussfaktoren, wie beispielsweise auf Unebenheiten der Führungsschienen (z.B. an den Schienenstößen), Verformungen der Führungsschienen und/oder lokale Rauheitsunterschiede (beispielsweise hervorgerufen durch Verschleiß) zurückzuführen.

Manche dieser Einflussfaktoren treten erst auf, nachdem die Reckanlage bereits in Betrieb ist, z.B. durch das Aufheizen des Ofens, durch Setzungseffekte am Fundament der Reckanlage und/oder durch Verschleiß an den Führungsschienen. Zudem ist die Reibung abhängig von den Prozessparametern, die beim Verstrecken der Materialbahn herrschen. Hierzu gehören unter anderem die Materialbahngeschwindigkeit, Temperaturen, Reckkräfte, Materialbahndicke, usw.

Um auftretende Veränderungen, insbesondere Reibungsveränderungen, der Reckanlage frühzeitig zu erkennen, ist es bekannt die Leistung (Antriebsleistung) der Antriebssysteme zu überwachen. Kommt es zu einem Anstieg der Leistung deutet dies auf einen zunehmenden Verschleiß und eine höhere Reibung hin. Mit dieser Überwachung ist es jedoch nicht möglich die Veränderung lokal einzugrenzen.

### Beschreibung der Erfindung

Es ist daher Aufgabe der Erfindung auftretende Veränderungen an der Reckanlage, insbesondere der Reibung zwischen Führungsschiene und Kluppeneinheiten, zu erfassen und zu lokalisieren. Außerdem kann die Erfindung dazu genutzt werden, Prozessparameter wie z.B. Temperatur oder Zugkraft der Materialbahn zu erfassen, um somit den Reckprozess zu optimieren.

Diese Aufgabe wird durch eine Messkluppeneinheit gemäß Anspruch 1, durch eine Reckanlage gemäß Anspruch 13 und durch ein Verfahren gemäß Anspruch 17 gelöst. Weitere Aspekte der Erfindung sind in den Unteransprüchen sowie der nachfolgenden Beschreibung genannt.

Insbesondere wird die Aufgabe durch eine Messkluppeneinheit für eine Reckanlage gelöst. Die Reckanlage kann beispielsweise eine Quer-, Längs- und/oder Simultan-Reckanlage sein.

Die Messkluppeneinheit weist einen Grundkörper, zumindest ein Führungselement und zumindest eine Klemmvorrichtung auf.

Die Klemmvorrichtung ist an dem Grundkörper angeordnet. Beispielsweise kann die Klemmvorrichtung mit dem Grundkörper zumindest teilweise integral ausgebildet sein, oder an dem Grundkörper fixiert sein. In einem Aspekt ist die Klemmvorrichtung an dem Grundkörper angeschraubt, angeschweißt, vernietet, und/oder in anderer Art fixiert.

Die zumindest eine Klemmvorrichtung ist zum Klemmen einer Materialbahn (beispielsweise einer zu verstreckenden Kunststofffolie) eingerichtet. Insbesondere kann die Klemmvorrichtung eine Materialbahn vor oder in einer Einlaufzone der Reckanlage klemmen. Die Klemmung kann in oder nach einer Auslaufzone der Reckanlage gelöst werden, d.h. wenn die Materialbahn mittels der Kluppen- bzw. Messkluppeneinheiten durch die Reckanlage transportiert wurde.

Insbesondere weist die Klemmvorrichtung wenigstens eine Messerklappe auf, die rotierbar am Grundkörper befestigt ist. Die rotierbare Messerklappe kann mit einer Klemmfläche des Grundkörpers zusammenwirken, um die Materialbahn zwischen der Messerklappe und der Klemmfläche zu klemmen.

Das zumindest eine Führungselement ist am Grundkörper angeordnet und dazu eingerichtet, die Messkluppeneinheit auf einer Führungsschiene zu führen. Das Führungselement kann integral mit dem Grundkörper ausgebildet, oder an diesem befestigt sein (direkt oder indirekt). Beispielsweise ist das Führungselement formschlüssig mit dem Grundkörper verbunden. In einem Beispiel ist das Führungselement ein Gleitelement (z.B. ein Gleitschuh), welches in eine entsprechende Aufnahme des Grundkörpers formschlüssig eingeführt werden kann. In einem anderen Beispiel ist das Führungselement eine Führungsrolle, die auf einer Führungsschiene einer Reckanlage abrollt.

Insbesondere können mehrere Führungselemente vorgesehen sein und/oder das Führungselement kann so geformt sein (beispielsweise U-Förmig), dass das/die Führungselement(e) sich auf zumindest zwei (vorzugsweise zumindest drei oder auf vier) Seiten der Führungsschiene abstützen, um die Messkluppeneinheit auf einer Führungsschiene zu führen.

Die Messkluppeneinheit umfasst zudem eine Sensorvorrichtung, die dazu eingerichtet ist, Messdaten während des Betriebs der Messkluppeneinheit in einer Reckanlage zu erfassen.

Da die Messkluppeneinheit dazu eingerichtet ist, die Materialbahn zu klemmen und auf der Führungsschiene der Reckanlage - wie die übrigen Kluppeneinheiten der Reckanlage - geführt zu werden, kann die Sensorvorrichtung Messdaten mit einem lokalen Bezug erfassen. Das heißt, die Messdaten können einer Position auf der Führungsschiene zugeordnet werden. So können beispielsweise auftretende Veränderungen, insbesondere Reibungsveränderungen, der Reckanlage frühzeitig und lokal eingegrenzt und erkannt werden.

Insbesondere können die Messdaten zur Auswertung auch mit Prozessparametern, wie aktueller Fördergeschwindigkeit, Temperatur, Materialbahndicke und/oder Materialart abgeglichen werden. Somit können Prozessparameter, die beispielsweise einen Einfluss auf die Reibung haben, bei der Bestimmung von auftretenden Veränderungen berücksichtigt werden. Mithin kann beispielsweise unterschieden werden, ob die gemessenen Änderungen (beispielsweise der Reibung) auf Verschleiß zurückzuführen sind, oder auf eine (gewollte) Änderung der Prozessparameter.

Insbesondere kann aus den erfassten Messdaten auf den Zustand der Führungsschiene(n) bzw. der (Mess-)Kluppeneinheiten rückgeschlossen werden. Steigen beispielsweise die in Lauf- oder Querrichtung auf die Messkluppeneinheit wirkenden und erfassten Kräfte unabhängig von einer Position der Messkluppeneinheit auf der Laufschiene, deutet dies auf einen allgemeinen Verschleiß der Kluppeneinheiten bzw. der Laufschiene hin. Wird ein lokaler Anstieg der in Laufrichtung auf die Messkluppeneinheit wirkenden und erfassten Kräfte erkannt, kann auf eine lokale Schädigung und/oder Verunreinigung der Laufschiene geschlossen werden.

In einem Aspekt kann die Messkluppeneinheit in einfacher Weise in eine Reckanlage eingebaut werden. Hierzu wird eine konventionelle Kluppeneinheit der Reckanlage durch die Messkluppeneinheit ausgetauscht. Der Tausch kann in kurzer Zeit (z.B. wenige Minuten) erfolgen, sodass auch bestehenden Anlagen mittels zumindest einer Messkluppeneinheit vermessen werden können. Zudem werden so längere Stillstandzeiten vermieden.

Zudem kann die Messkluppeneinheit einen Energiespeicher aufweisen. Der Energiespeicher kann die Sensorvorrichtung mit elektrischer Energie versorgen, um Messdaten zu erfassen. Der Energiespeicher kann beispielsweise eine Batterie oder ein Akkumulator sein. Zusätzlich oder alternativ kann die Messkluppeneinheit einen Generator umfassen, um elektrische Energie für die Versorgung der Sensorvorrichtung bereitzustellen. Der Generator kann beispielsweise eine Induktionsspule umfassen, in welche elektrische Energie aufgrund der Bewegung der Messkluppeneinheit induziert wird. In einem anderen Aspekt kann beispielsweise eine Laufrolle mit einem elektrischen Generator verbunden sein, um Rotationsenergie der Laufrolle in elektrische Energie zu wandeln.

Die von der Sensorreinrichtung erfassten Messdaten (insbesondere, auf die Messkluppeneinheit wirkende Kräfte und/oder Beschleunigungen, Temperatur und/oder dergleichen) können nach dem Erfassen gespeichert und/oder gesendet werden.

Hierzu kann die Sensorvorrichtung eine Datenspeichereinheit zur Speicherung der erfassten Messdaten und/oder eine Sendeeinheit zum drahtlosen Versenden der erfassten und/oder gespeicherten Messdaten umfassen.

Die Datenspeichereinheit kann beispielsweise eine SSD, HDD oder ein Flash-Speicher (wie z.B. eine SD-Karte, ein USB-Stick), oder dergleichen sein. Die Größe des Speichers kann so bemessen sein, dass Messdaten mehrere Stunden, Tage oder sogar Wochen gespeichert werden können. Diese Datenspeichereinheit kann entnommen und ausgelesen werden, und/oder die gespeicherten Daten können drahtlos übertragen werden.

Die Sendeeinheit kann zur dauerhaften Übertragung der erfassten bzw. gespeicherten Messdaten eingerichtet sein. In diesem Fall können entlang der Führungsschienen Empfangsantennen angeordnet sein, die die gesendeten Daten empfangen können.

Die Speicherung der erfassten Messdaten erlaubt es die Daten nur zu bestimmten Zeiten zu senden. Somit ist keine dauerhafte drahtlose Kommunikationsverbindung nötig. Beispielsweise können die Messdaten übertragen werden, wenn sich die Messkluppeneinheit außerhalb eines Ofens der Reckanlage befindet und/oder die Reckanlage im Stillstand oder in Langsamfahrt ist. Der Einbau von Antennen bzw. Empfangseinheiten in den Ofen kann somit entfallen.

Insbesondere kann die Sensorvorrichtung auch dazu eingerichtet sein, Signale, wie Steuersignale, zu empfangen. Ein Steuersignal kann beispielsweise eine Messung initiieren oder beenden, oder es kann die Übertragung der erfassten Messdaten angeordnet werden. Ebenso ist es möglich mittels Steuersignalen die erneute Übertragung nicht korrekt empfangener Daten anzuordnen. Weiterhin kann die Erfassung selbst über Steuersignale gesteuert werden. Hierzu können beispielsweise Sensoren der Sensorvorrichtung ausgewählt und/oder eine Abtastrate eingestellt werden.

In einem Aspekt umfasst die Sensorvorrichtung zumindest einen der folgenden Sensoren: einen Temperatursensor, einen Kraftsensor, insbesondere ein Dehnmessstreifen, oder ein Piezosensor, einen Beschleunigungssensor, einen Hallsensor und/oder dergleichen.

Werden mehrere, vorzugsweise unterschiedliche Sensoren, verwendet, können die entsprechenden erfassten Messdaten zueinander in Korrelation gesetzt werden (Sensorfusion) . Dies ermöglicht eine detaillierte und/oder zuverlässigere Bestimmung der Anlagen- und/oder Prozessparameter.

Beispielsweise kann aus den erfassten Messdaten auf den Zustand der Führungsschienen bzw. der Kluppeneinheiten rückgeschlossen werden. Hierzu können beispielsweise verschiedene Kräfte erfasst werden.

Insbesondere kann die Sensorvorrichtung zum Erfassen einer auf das zumindest eine Führungselement wirkenden Kraft (insbesondere in einer Laufrichtung L und/oder in einer Richtung P, welche quer zu der Laufrichtung der Messkluppeneinheit ist (Querrichtung)) eingerichtet sein.

In einem Beispiel wird eine Kraft auf die Messkluppeneinheit in Laufrichtung L (beispielsweise die sogenannte Kettenlängskraft) gemessen. Diese Kraft ist ein Maß für die lokale Reibung und kann beispielsweise mittels Dehnmessstreifen erfasst werden.

Zudem kann eine Kraft in einer Richtung P quer zur Laufrichtung L der Messkluppeneinheit (insbesondere eine Druckkraft) vorzugsweise wirkend zwischen Führungsschiene und Führungselement bestimmt werden.

Das zumindest eine Führungselement kann ein Gleitelement oder eine Führungsrolle umfassen. Im Falle eines Gleitelements, kann auf einer der Führungsschiene abgewandten Seite des Gleitelements ein Druckkraftsensor (beispielsweise ein Piezosensor) angeordnet sein. Beispielsweise kann der Druckkraftsensor zwischen dem Grundkörper und dem Gleitelement angeordnet sein. Der Druckkraftsensor kann dazu eingerichtet sein eine Kraft in einer Richtung P quer zur Laufrichtung L der Messkluppeneinheit zu erfassen.

Im Falle von Führungsrollen können Radial- und/oder Axialkräfte auf die Führungsrolle bzw. deren Achse erfasst werden. Die Radial- und/oder Axialkräfte können beispielsweise mit zumindest einem Dehnmessstreifen erfasst werden.

Diese Druckkraft- bzw. Radial und/oder Axialkraftsensoren können Schwankungen in der Normalkraft zwischen Führungselement und Führungsschiene, erfassen. Diese können auf Unebenheiten in der Führungsschiene und/oder auf Verschmutzungen hinweisen.

Weiterhin kann die Messkluppeneinheit zumindest einen Sensor (z.B. Dehnmessstreifen) umfassen, welcher eine Zugkraft einer geklemmten Materialbahn (insbesondere Folie) auf die Klemmvorrichtung erfasst. Somit kann der Reckprozess überwacht werden.

Ebenso kann (mittels zumindest eines Temperatursensors) die Temperatur an der Kluppeneinheit, insbesondere im Bereich der Führungsschiene und/oder im Bereich der Klemmvorrichtung gemessen werden. Wie die Erfassung der Zugkraft erlaubt die Erfassung der Temperatur(en) Rückschlüsse auf den Reckprozess zu ziehen. Somit können etwaige Prozessparameter, wie Temperaturen in verschiedenen Ofenbereichen, Ausblasgeschwindigkeiten, Materialbahngeschwindigkeit, Materialbahndicken, Reckverhältnisse, etc. eingestellt bzw. angepasst (insbesondere geregelt) werden.

In einem Aspekt kann die Messkluppeneinheit dazu eingerichtet sein, von einem Antriebssystem (insbesondere ein Linearmotor) einer Reckanlage beschleunigt und/oder abgebremst zu werden.

In einem anderen Aspekt kann der Grundkörper dazu eingerichtet mit einem Kettenglied verbunden zu werden. Insbesondere kann der Grundkörper formschlüssig mit einem Kettenglied eines Kettenstrangs eines Antriebssystems einer Reckanlage verbunden werden. Der Grundkörper kann hierzu ein Kopplungsmittel aufweisen und das Kettenglied ein entsprechendes Kopplungsmittel. Über die Kopplungsmittel kann der Grundkörper sodann mit dem Kettenglied formschlüssig verbunden werden. Mittels des Kettenstrangs kann die Messkluppeneinheit angetrieben, insbesondere beschleunigt und/oder abgebremst, werden.

In einem weiteren Aspekt umfasst die Messkluppeneinheit zumindest ein Kettenglied. Dieses Kettenglied kann mit dem Grundkörper fest (beispielsweise formschlüssig) verbunden sein, oder integral mit dem Grundkörper ausgeführt sein. Das Kettenglied der Messkluppeneinheit kann mit zumindest einem weiteren Kettenglied verbunden werden, um in einen Kettenstrang eines Antriebssystems einer Reckanlage eingebunden zu werden. Ebenso kann die Messkluppeneinheit mehrere Kettenglieder umfassen, wobei zumindest ein Kettenglied mit dem Grundkörper verbunden ist.

Die Sensorvorrichtung kann zur Erfassung einer auf das zumindest eine Kettenglied wirkenden Kraft, insbesondere in einer Laufrichtung L (Kettenlängskraft) und/oder in einer Richtung P quer zu einer Laufrichtung L der Messkluppeneinheit wirkenden Kraft, eingerichtet sein. Das entsprechende Kettenglied kann ein Kettenglied sein, welches mit dem Grundkörper verbunden ist, und/oder welches mit dem Kettenglied verbunden ist, welches mit dem Grundkörper verbunden ist.

Insbesondere kann das Kettenglied ein Ketteninnenglied oder ein Kettenaußenglied sein. In einem Aspekt ist ein Kettenaußenglied mit dem Grundkörper verbunden und ein Ketteninnenglied ist mit dem Kettenaußenglied verbunden, wobei das Ketteninnenglied und das Kettenaußenglied in einen Kettenstrang eines Antriebssystems einer Reckanlage eingebunden sind, oder eingebunden werden können.

Insbesondere kann die Außenkontur der Messkluppeneinheit im Wesentlichen einer Außenkontur einer gewöhnlichen Kluppeneinheit der Reckanlage entsprechen, sodass beim Einbau der Messkluppeneinheit in die Reckanlage keine weiteren Modifikationen notwendig sind und keine Kollisionen mit anderen Teilen der Reckanlage drohen. Dadurch kann nach Einbau der Messkluppeneinheit direkt mit der Erfassung der Messdaten begonnen werden - ohne zeitaufwendige Anpassungen oder Rückbauten an Teilen der Reckanlage, wie dem Ofen, oder dem Antriebssystem.

Insbesondere kann an einem Kettenglied zumindest ein Kraftsensor angeordnet sein (beispielsweise zur Erfassung der Kettenlängskraft) . In einem Aspekt ist ein erster Kraftsensor auf einer ersten Kettenlasche des Kettenglieds (beispielsweise einer oberen Kettenlasche) angeordnet und/oder ein zweiter Kraftsensor ist auf einer zweiten Kettenlasche des Kettenglieds (beispielsweise auf einer unteren Kettenlasche) angeordnet. Hierdurch kann die Kettenlängskraft sehr exakt ermittelt werden. Das Kettenglied kann insbesondere ein Ketteninnenglied sein.

Weiterhin kann die Sensorvorrichtung einen Timer umfassen. Somit kann die Sensorvorrichtung dazu eingerichtet sein einen zeitlichen Verlauf der Messdaten zu erfassen, zu speichern und/oder zu versenden. Insbesondere kann der Verlauf der Messdaten im Betrieb der Messkluppeneinheit versendet werden. Beispielsweise kann der Verlauf der Messdaten übertragen werden, wenn sich die Messkluppeneinheit außerhalb eines Ofens der Reckanlage befindet und/oder die Reckanlage im Stillstand oder in Langsamfahrt ist.

Umfasst die Sensorvorrichtung einen Hallsensor oder einen ähnlichen Sensor, kann ein Magnetfeld zumindest eines feststehenden Magneten zu einem bestimmten Zeitpunkt erfasst werden, zu welchem Zeitpunkt die Messkluppeneinheit auf der Führungsschiene an dem Magneten vorbeigeführt wird. Über den Zeitpunkt der Erfassung des Magnetfelds und das Wissen, wo der Magnet angeordnet ist, können die zeitlich erfassten Messdaten einer Position der Messkluppeneinheit auf der Führungsschiene zugeordnet werden. Erfasste Änderungen in den Messdaten lassen sich somit sehr genau lokalisieren.

Beispielsweise ist die Sensorvorrichtung dazu eingerichtet die Messdaten mit einer Frequenz von zumindest 2 kHz, oder von zumindest 2.5 kHz, oder von zumindest 3 kHz zu erfassen.

Bei einer Materialbahngeschwindigkeit von beispielsweise 700 m/min ergibt sich bei einer Messfrequenz von 2.5 kHz eine Ortsauflösung von ca. 5 mm.

Weiterhin kann die Sensorvorrichtung dazu eingerichtet sein zumindest 4, zumindest 8, zumindest 12, zumindest 16, oder zumindest 32 unterschiedliche Messdaten parallel zu erfassen bzw. Sensoren auszulesen. Hierzu können entsprechende A/D-Wandler und/oder Messdatenverstärker vorgesehen sein. Die Sensoren können auch sequentiell ausgelesen werden. Um die Ortsauflösung nicht zu vermindern, kann die Messfrequenz entsprechend heraufgesetzt werden.

In einem Aspekt ist die Sensorvorrichtung eine temperaturbeständige Sensorvorrichtung. Dies kann durch den Einsatz entsprechender temperaturbeständiger Materialien erreicht werden, durch das Vorsehen einer Kühlung und/oder durch die thermische Isolation, insbesondere der Elektronik und/oder der Sensorvorrichtung. Insbesondere kann die temperaturbeständige Sensorvorrichtung dazu eingerichtet sein, Messdaten während des Betriebs der Messkluppeneinheit in der Reckanlage zu erfassen, wobei die Betriebstemperatur der Reckanlage zumindest 200 °C, oder zumindest 300°C oder zumindest 400°C beträgt.

Die Aufgabe wird weiterhin durch eine Reckanlage, insbesondere eine Quer-, Längs- und/oder Simultan-Reckanlage, gelöst, welche Reckanlage zumindest eine Führungsschiene und wenigstens eine der zuvor beschriebenen Messkluppeneinheiten umfasst. Die zumindest eine Messkluppeneinheit ist mittels eines Führungselements an der Führungsschiene geführt. Sie kann also durch die Reckanlage transportiert werden und zugleich - mittels der Klemmvorrichtung - eine zu verstreckende Materialbahn klemmen. Mithin können Messdaten im Produktionsbetrieb der Reckanlage erfasst werden. Die erfassten Messdaten können zur Optimierung und/oder Regelung der Reckanlage, insbesondere deren Prozessparameter, genutzt werden.

Die Reckanlage umfasst zumindest einen Magneten, welcher im Bereich der zumindest einen Führungsschiene angeordnet ist. Die Messkluppeneinheit der Reckanlage kann dazu eingerichtet sein, ein Magnetfeld des zumindest einen Magneten zu einem Zeitpunkt zu erfassen, zu welchem Zeitpunkt die Messkluppeneinheit auf der Führungsschiene an dem Magneten vorbeigeführt wird. Über den Zeitpunkt der Erfassung des Magnetfelds und das Wissen, wo der Magnet angeordnet ist, können die zeitlich erfassten Messdaten einer Position der Messkluppeneinheit auf der Führungsschiene zugeordnet werden. Erfasste Änderungen in den Messdaten lassen sich somit sehr genau lokalisieren.

In einem weiteren Aspekt umfasst die Reckanlage zumindest eine Empfangseinheit. Die Empfangseinheit kann dazu eingerichtet sein, Messdaten von der Messkluppeneinheit zu empfangen, wobei die Empfangseinheit insbesondere außerhalb eines Reckofens angeordnet ist.

Weiterhin kann die Reckanlage unterschiedliche Arten von Messkluppeneinheiten umfassen. Eine erste Art kann zur Erfassung eines ersten Messdatentyps und eine zweite Art zur Erfassung eines zweiten Messdatentyps eingerichtet sein, wobei sich der erste und der zweite Messdatentyp unterscheiden. Zum Beispiel kann eine erste Messkluppeneinheit Kräfte, die auf die Messkluppeneinheit wirken erfassen und eine zweite Messkluppeneinheit kann Temperaturen erfassen, die auf die Messkluppeneinheit wirken. Die erfassten Messdaten beider Messkluppeneinheiten können dann einer Position auf der Führungsschiene zugeordnet und so in Korrelation zueinander gesetzt werden.

Die Aufgabe wird weiterhin durch ein Verfahren zur Erfassung von Messdaten in einer Reckanlage gelöst, wobei das Verfahren folgendes umfasst:
- Anordnen zumindest einer Messkluppeneinheit auf einer Führungsschiene einer Reckanlage;
- Führen der zumindest einen Messkluppeneinheit entlang der Führungsschiene, wobei die Messkluppeneinheit optional eine Materialbahn klemmt;
- Erfassen von Messdaten mittels der Messkluppeneinheit, und
- Speichern und/oder drahtloses Versenden der erfassten Messdaten, wobei das Versenden während und/oder nach dem Führen erfolgt.

Weiterhin kann das Verfahren das Zuordnen der erfassten Messdaten zu einer Position auf einer Führungsschiene der Reckanlage umfassen, sowie ein Steuern und/oder Regeln der Reckanlage basierend auf den erfassten Messdaten.

### Kurzbeschreibung der Figuren

Weitere Merkmale und Vorteile der Erfindung ergeben sich aus den beigefügten Figuren und der entsprechenden Figurenbeschreibung. In den Figuren zeigen:
- Fig. 1: eine schematische Darstellung einer ersten Ausführungsform einer erfindungsgemäßen Reckanlage;
- Fig. 2: eine schematische Darstellung einer zweiten Ausführungsform einer erfindungsgemäßen Reckanlage;
- Fig. 3: eine schematische Darstellung einer Messkluppeneinheit und einer Empfangseinheit;
- Fig. 4A,B: perspektivische Ansichten einer ersten Ausführungsform einer erfindungsgemäßen Messkluppeneinheit;
- Fig. 5A,B: perspektivische Ansichten einer zweiten Ausführungsform einer erfindungsgemäßen Messkluppeneinheit, und
- Fig. 6: eine Detailansicht einer Achse einer Führungsrolle.

### Ausführliche Beschreibung der Figuren

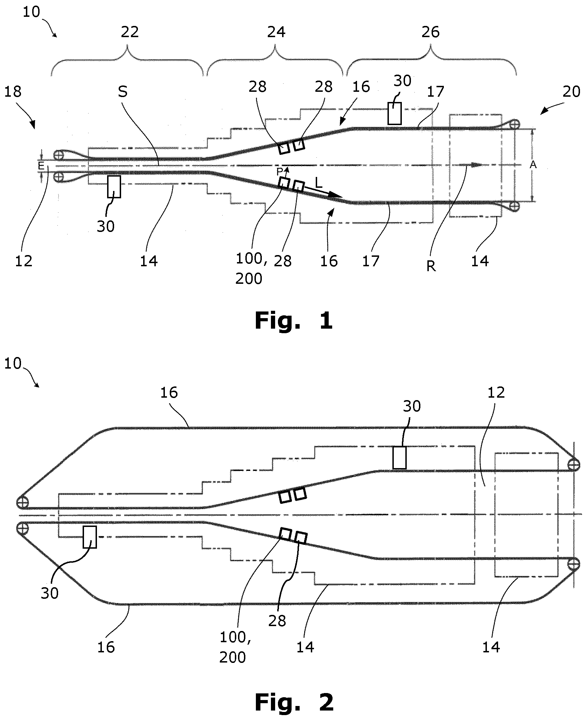

Insbesondere zeigt Fig. 1 eine Reckanlage 10. Diese weist einen Ofen 14 sowie zwei Antriebssysteme 16 auf.

Die Antriebssysteme 16 sind gegenüber einer Symmetrieebene S der Reckanlage 10 spiegelsymmetrisch angeordnet und erstrecken sich zumindest teilweise im Ofen 14. In einer Einlaufzone 18 sowie einer Auslaufzone 20, in denen die Materialbahn 12 der Reckanlage 10 zu- bzw. abgeführt wird, verlaufen die Antriebssysteme 16 außerhalb des Ofens 14.

Neben der Einlaufzone 18 und der Auslaufzone 20 weist die hier gezeigte Reckanlage zumindest drei weitere Zonen 22, 24, 26 auf.

Die Zonen 22, 24, 26 grenzen aneinander an, sodass - entlang der üblicher Bewegungs- bzw. Abzugsrichtung R der Reckanlage 10 betrachtet - an die Einlaufzone 18 zunächst die erste Zone 22, dann die zweite Zone 24, dann die dritte Zone 26, und schließlich die Auslaufzone 20 anschließt.

In der an die Einlaufzone 18 angrenzenden ersten Zone 22 der Reckanlage 10, auch Vorheizzone genannt, haben die Antriebssysteme 16 einen ersten Abstand zueinander.

In der zweiten Zone 24, auch Reckzone genannt, vergrößert sich der Abstand der beiden Antriebssysteme 16 zueinander, bis schließlich zu Beginn der dritten Zone 26, auch Wärmebehandlungszone genannt, ein zweiter Abstand erreicht ist.

Jedes der Antriebssysteme 16 hat in an sich bekannter Weise eine Führungsschiene 17, an der eine Vielzahl von Kluppeneinheiten 28 geführt sind. Die Kluppeneinheiten 28 können durch einen Antrieb des jeweiligen Antriebssystems 16 entlang der Führungsschiene 17 bewegt werden.

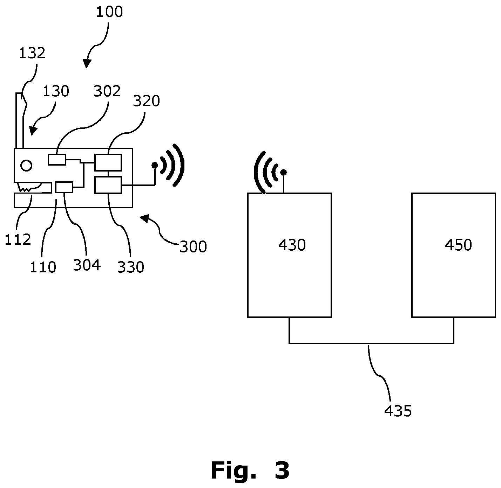

In den Figuren 1 und 2 sind jeweils nur zwei Kluppeneinheiten 28 pro Antriebssystem 16 symbolisch dargestellt. Die Reckanlage 10 weist jedoch mehr Kluppeneinheiten 28 auf. Zudem können auf der Führungsschiene 17 eine oder mehrere Messkluppeneinheiten 100, 200 geführt sein. Die Kluppeneinheiten 28 und die Messkluppeneinheiten 100, 200 unterscheiden sich im Wesentlichen durch das Vorhandensein einer Sensorvorrichtung zur Erfassung von Messdaten. Ein möglicher Aufbau der Messkluppeneinheit 100, 200 ist in den Figuren 3 bis 5B gezeigt.

Die Führungsschiene 17 der jeweiligen Antriebssysteme 16 beschreiben eine geschlossene Bahn von der Einlaufzone 18 zur Auslaufzone 20 und zurück. Der Führungsschienenabschnitt, der den Vorlauf bildet, erstreckt sich in vorgesehener Bewegungsrichtung der Kluppeneinheiten 28 zwischen der Einlaufzone 18 und der Auslaufzone 20 innerhalb des Ofens 14.

Der Führungsschienenabschnitt, der in üblicher Betriebsrichtung von der Auslaufzone 20 zur Einlaufzone 18 verläuft und den Rücklauf bildet, ist im gezeigten Ausführungsbeispiel ebenfalls innerhalb des Ofens 14 angeordnet. Er kann jedoch auch, wie in der Ausführungsform nach Figur 2 gezeigt ist, außerhalb des Ofens 14 angeordnet sein.

Zum Betrieb der Reckanlage 10 wird die zu reckende Materialbahn 12, beispielsweise eine Kunststofffolie, in der Einlaufzone 18 der Reckanlage 10 in Abzugsrichtung R zugeführt. Hierzu wird die Materialbahn 12 mittels ihrer in Abzugsrichtung R verlaufenden Kanten an beiden Antriebssysteme 16 befestigt.

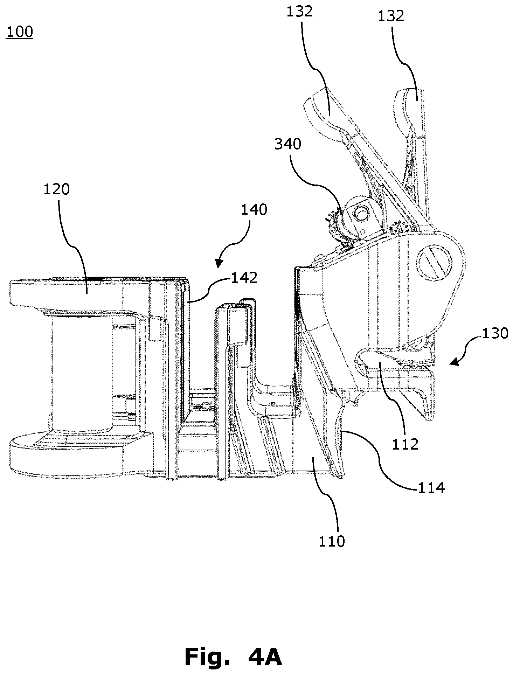

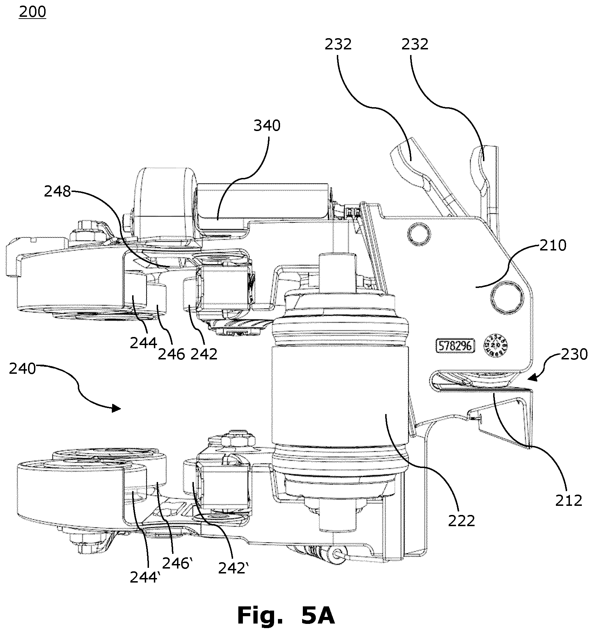

Genauer gesagt werden die Ränder der Materialbahn 12 durch eine Klemmvorrichtung 130, 230 (s. Fig. 4A und 5A) der Kluppeneinheiten 28 bzw. der Messkluppeneinheit 100, 200 geklemmt und somit durch die Bewegung der (Mess-)Kluppeneinheiten 28, 100, 200 entlang der Führungsschienen 17 der Antriebssysteme 16 bewegt.

In der Einlaufzone 18 hat die Materialbahn 12 eine Breite E senkrecht zur Abzugsrichtung R, die in etwa dem ersten Abstand zwischen den Antriebssystemen 16 entspricht.

Die Materialbahn 12 wird dann durch die erste Zone 22 geführt und dort erwärmt. In der anschließenden zweiten Zone 24, also der Reckzone, wird die Materialbahn 12 gereckt, da sich der Abstand der Antriebssysteme 16 kontinuierlich vergrößert. Zum Ende der zweiten Zone 24 weist die Materialbahn 12 eine zweite Breite A auf.

Nach erfolgter Reckung durchläuft die Materialbahn 12 nun die dritte Zone 26, bei der eine Relaxierung der Materialbahn 12 erfolgen kann, bevor die Materialbahn 12 in der Auslaufzone 20 von den Kluppeneinheiten 28, 100, 200 gelöst wird und sie die Reckanlage 10 mit der Breite A verlässt.

Beispielsweise ist die Reckanlage 10 eine Folien-Breit- bzw. Quer-Reckanlage, die kurz als TDO (TDO = transverse direction orienter) bezeichnet wird.

Denkbar ist auch, dass die Reckanlage 10 eine Simultanreckanlage ist, in der die Materialbahn 12 in der zweiten Zone 24, also der Reckzone, nicht nur in Richtung quer zur Abzugsrichtung R sondern auch in der Abzugsrichtung R gereckt werden kann.

Während der Verarbeitung der Materialbahn 12 wirken vor allem in der zweiten Zone 24, also der Reckzone, auf die Kluppeneinheiten 28 große Zugkräfte in eine Zugrichtung. Die Zugrichtung hat eine überwiegende Komponente in eine Primärrichtung P der Kluppeneinheiten 28 und eine kleinere Komponente quer zur Primärrichtung P.

Die Kluppeneinheiten 28 müssen somit dazu ausgebildet sein, die hohen auftretenden Zugkräfte auszuhalten, insbesondere in ihrer Primärrichtung P. Die Primärrichtung P ist dabei diejenige horizontale Richtung, die quer zu einer in der Kluppeneinheit 28 aufgenommenen Kante der Materialbahn 12 verläuft. Die Primärrichtung P ist dabei im Wesentlichen normal zu einer Laufrichtung L der (Mess-)Kluppeneinheiten, welche durch den Verlauf der Führungsschienen vorgegeben ist.

Die Reckanlage 10 umfasst zumindest einen Magnet 30. Der Magnet 30 ist im Bereich der zumindest einen Führungsschiene 17 angeordnet. Wird eine Messkluppeneinheit an dem Magnet 30 vorbeigeführt, kann das Magnetfeld des zumindest einen Magneten 30 erfasst werden. Über den Zeitpunkt der Erfassung des Magnetfelds können weitere Messwerte einer Position auf der Führungsschiene zugeordnet werden.

Figur 3 zeigt eine schematische Darstellung einer Messkluppeneinheit 100 und einer Empfangseinheit 430, welche mit einer Auswerteeinheit 450 drahtgebunden oder drahtlos über eine Kommunikationsverbindung 435 verbunden ist. Die Messkluppeneinheit 100 umfasst eine Klemmvorrichtung 130, die zum Klemmen einer Materialbahn eingerichtet ist.

Insbesondere weist die Klemmvorrichtung 130 wenigstens eine Messerklappe 132 auf, die rotierbar am Grundkörper 110 befestigt ist. Die rotierbare Messerklappe 132 kann mit einer Klemmfläche 112 des Grundkörpers 110 zusammenwirken, um die Materialbahn zwischen der Messerklappe 132 und der Klemmfläche 112 zu klemmen. Insbesondere ist die Klemmvorrichtung 130 wie bei der Kluppeneinheit 28 ausgeführt. Somit kann die Materialbahn vollständig geklemmt werden.

Weiterhin umfasst die Messkluppeneinheit 100 eine Sensorvorrichtung 300, die dazu eingerichtet ist Messdaten, wie Kräfte, Beschleunigungen, Temperaturen und/oder Magnetfelder während des Betriebs der Messkluppeneinheit 100 in einer Reckanlage zu erfassen.

Die Sensorvorrichtung kann unterschiedliche Sensoren aufweisen. Hier ist exemplarisch ein Temperatursensor 302 und ein Kraftsensor 304 gezeigt. Die erfassten Messdaten können über A/D-Wandler und/oder Verstärker geleitet werden und sodann mittels einer Datenspeichereinheit 320 (z.B. umfassend eine SSD, HDD, oder einen Flash-Speicher, wie eine SD-Karte, oder einen USB-Stick, oder dergleichen) gespeichert werden. Die erfassten und/oder gespeicherten Messdaten können über eine Sendeeinheit 330 versendet werden und von einer Empfangseinheit 430 (welche nicht Teil der Messkluppeneinheit ist) empfangen werden.

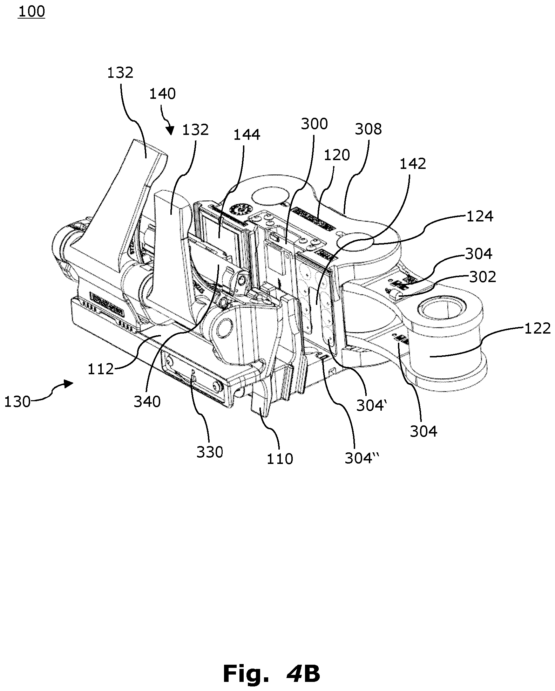

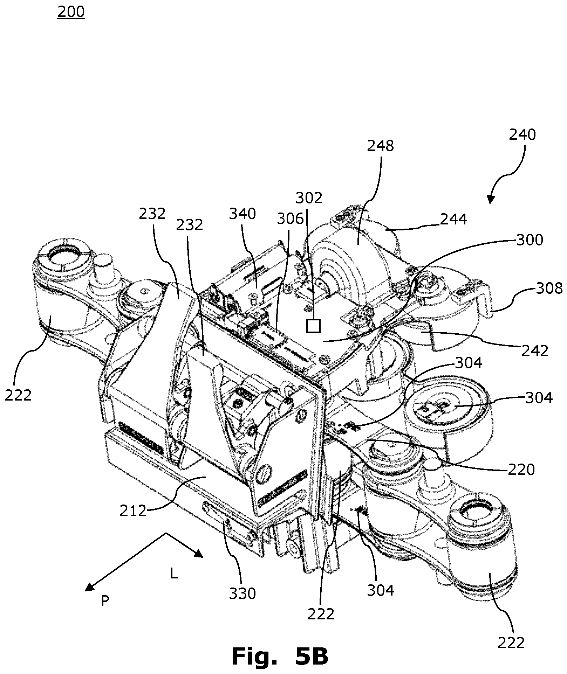

Wie in den Figuren 4B und 5B gezeigt ist, kann eine Antenne der Sendeeinheit 330 so an der Messkluppeneinheit angeordnet sein, dass diese in Richtung der Materialbahn weist. Die von der Empfangseinheit empfangenen Daten können sodann an einer Auswerteinheit 450 übertragen werden.

Alternativ oder zusätzlich kann die Übertragung der Daten auch durch eine Entnahme eines mobilen Datenspeichers (wie beispielsweise einer SD-Karte) aus der Datenspeichereinheit 320 erfolgen. Die auf dem mobilen Datenspeicher gespeicherten Daten können sodann ausgelesen (z.B. mittels eines Laptops), gespeichert und an die Auswerteeinheit 450 übertragen werden.

Diese Daten können weiterhin zum Optimieren von Prozessparametern, insbesondere zum Steuern und/oder Regeln der Reckanlage genutzt werden.

In den Figuren 4A und 4B ist eine Messkluppeneinheit 100 exemplarisch in unterschiedlichen Ansichten dargestellt.

Die Messkluppeneinheit 100 weist einen Grundkörper 110 ein Führungselement 140 und zumindest eine Klemmvorrichtung 130 auf. Die Klemmvorrichtung 130 ist am Grundkörper 110 angeordnet und zum Klemmen einer Materialbahn eingerichtet. Insbesondere kann eine Materialbahn zwischen den rotierbar angeordneten Messerklappen 132 und einer Klemmfläche 112 des Grundkörpers 110 geklemmt werden.

Das Führungselement 140 ist auch am Grundkörper 110 angeordnet und dazu eingerichtet, die Messkluppeneinheit 100 auf einer Führungsschiene einer Reckanlage zu führen.

In der hier gezeigten Ausführungsform (s. Fig. 4B) der Messkluppeneinheit 100 ist der Grundkörper 110 formschlüssig mit einem Kettenglied 120 verbunden, wobei das Kettenglied 120 mit einem Kettenglied eines Kettenstrangs eines Antriebssystems einer Reckanlage verbunden werden kann.

Beispielsweise wird der Grundkörper 110 mittels Schrauben 114 mit dem Kettenglied 120 verschraubt. Das Kettenglied 120 (hier ein Kettenaußenglied) ist wiederum mit einem Ketteninnenglied 122 über einen Bolzen 124 verbunden.

Das Führungselement 140 umfasst hier mehrere Gleitelemente 142, 144. Insbesondere ist das Führungselement 140 U-förmig gestalten und kann so eine Führungsschiene bzw. Gleitschiene umgreifen. Die Gleitelemente 142, 144 gleiten auf der Führungsschiene (nicht gezeigt) und führen so die Messkluppeneinheit 100 auf der Führungsschiene.

In Figur 4A ist zudem ein Energiespeicher 340, beispielsweise ein Akkumulator oder eine (Hochtemperatur-)Batterie, gezeigt, welcher eine Sensorvorrichtung 300 mit Energie versorgt. Hier ist der Energiespeicher hinter den Messerklappen 132 (von der Materialbahn aus gesehen) angeordnet.

In Figur 4B ist nochmals die Messkluppeneinheit 100 aus Figur 4A jedoch in einer anderen Ansicht gezeigt. Die Sensorvorrichtung 300, insbesondere die Elektronik der Sensorvorrichtung, inklusive A/D-Wandler, Verstärker und einer Datenspeichereinheit ist an dem Kettenglied 120, insbesondere zwischen zwei Gleitelementen 142, 144 angeordnet.

Die Sensorvorrichtung 300 umfasst unterschiedliche Sensorarten. Hier sind exemplarisch ein Temperatursensor 302, unterschiedliche Kraftsensoren 304, 304', 304'' und ein Hallsensor 308 gezeigt. Auf einer Hauptplatine (beispielsweise ein PCB) der Sensorvorrichtung 300 kann beispielsweise weiterhin ein (Dreiachsen-) Beschleunigungs- und/oder -Drehratensensor angeordnet sein. Die Bereitstellung weiterer Sensoren, insbesondere Druck- und/oder Abstandssensoren, ist ebenso möglich. Wie mit Bezug auf Fig. 5B näher beschrieben ist, kann die Messkluppeneinheit auch Temperatursensor(en) und/oder Beschleunigungssensor(en) sowie weitere Sensoren umfassen.

Insbesondere kann die Sensorvorrichtung 300 zum Erfassen einer auf das Führungselement 140 wirkenden Kraft (insbesondere in einer Laufrichtung L und/oder quer zu einer Laufrichtung P der Messkluppeneinheit) eingerichtet sein.

Das Führungselement 140 umfasst Gleitelemente 142, 144. Unter diesen Gleitelementen, d.h. auf der von der Führungsschiene abgewandten Seite kann ein Druckkraftsensor (beispielsweise ein Piezosensor 304`) angeordnet sein. Der Druckkraftsensor 304' kann ein Sensorarray umfassen, dass nicht nur eine Druckkraft auf das Gleitelement 142 erfasst, sondern ein 2D-Bild der auf das Gleitelement 142 wirkenden Druckkräfte.

Das Sensorarray kann auch dazu eingerichtet sein eine Gesamtkraft, insbesondere eine Gesamt-Druckkraft, zu erfassen. Hierzu können die einzelnen Sensoren des Sensorarrays entsprechend verschalten sein.

Zur Ermittlung der auf die Kettenglieder 122, 120 wirkenden Zugkräfte kann ein erster Kraftsensor 304 auf einer ersten (oberen) Kettenlasche des Kettenglieds 122 angeordnet sein und ein zweiter Kraftsensor 304" kann auf einer zweiten (unteren) Kettenlasche des Kettenglieds 122 angeordnet sein.

Weiterhin kann die Messkluppeneinheiten 100 zumindest einen Sensor 304" (z.B. Dehnmessstreifen, nicht dargestellt) umfassen, welcher eine Zugkraft einer geklemmten Materialbahn (insbesondere Folie) auf die Klemmvorrichtung 130 erfasst. Somit kann der Reckprozess überwacht werden.

Wie in Figur 4B gezeigt ist, ist die Sensorvorrichtung 300 zur Erfassung einer auf das zumindest eine Kettenglied 122 wirkenden Kraft, insbesondere in einer Laufrichtung L (Kettenlängskraft) und/oder in einer Richtung P quer zu einer Laufrichtung L der Messkluppeneinheit 100 wirkenden Kraft, eingerichtet. Das Kettenglied 122 weist hierzu auf einer ersten Kettenlasche des Kettenglieds (hier der oberen Kettenlasche) einen Kraftsensor 304 auf. Zudem ist auf einer unteren, zweiten Kettenlasche des Kettenglieds 220 ein weiterer Kraftsensor 304 angeordnet.

In den Figuren 5A und 5B ist eine Messkluppeneinheit 200 exemplarisch in unterschiedlichen Ansichten dargestellt. Die Messkluppeneinheit 200 weist einen Grundkörper 210 ein Führungselement 240 und zumindest eine Klemmvorrichtung 230 auf. Die Klemmvorrichtung 230 ist am Grundkörper 210 angeordnet und zum Klemmen einer Materialbahn eingerichtet. Insbesondere kann eine Materialbahn zwischen den rotierbar angeordneten Messerklappen 232 und einer Klemmfläche 212 des Grundkörpers 210 geklemmt werden.

Das Führungselement 240 ist auch am Grundkörper 210 angeordnet und dazu eingerichtet, die Messkluppeneinheit 200 auf einer Führungsschiene einer Reckanlage zu führen.

Das Führungselement 240 umfasst hier mehrere Führungsrollen 242, 244, 246, 248, 242', 244' und 246'. Diese Führungsrollen können eine Führungsschiene zwischen sich aufnehmen und sich so auf der Führungsschiene abstützen, dass die Messkluppeneinheit 200 auf der Führungsschiene geführt wird.

Weiterhin ist Grundkörper 210 formschlüssig mit einem Ketteninnenglied 222 verbunden, welches wiederum über ein Kettenaußenglied 220 an einem weiteren Ketteninnenglied 222 angefügt ist (s. Fig. 5B).

In den Figuren 5A und 5B ist zudem ein Energiespeicher 340, beispielsweise ein Akkumulator, oder eine (Hochtemperatur-)Batterie, gezeigt, welcher eine Sensorvorrichtung 300 mit Energie versorgt.

In Figur 5B ist nochmals die Messkluppeneinheit 200 aus Figur 5A jedoch in einer anderen Ansicht gezeigt. Die Sensorvorrichtung 300, insbesondere die Elektronik der Sensorvorrichtung, inklusive A/D-Wandler, Verstärker und einer Datenspeichereinheit sind auf einer Seite der Klemmvorrichtung 230 angeordnet, die im Betrieb der Materialbahn abgewandt ist.

Die Sensorvorrichtung 300 umfasst unterschiedliche Sensorarten. Hier sind exemplarisch ein Temperatursensor 302, mehrere Kraftsensoren 304, insbesondere Dehnmessstreifen, ein Beschleunigungssensor 306 (beispielsweise ein Dreiachsen-Drehraten- und Dreiachsen-Beschleunigungssensor) und zwei Hallsensoren 308 gezeigt.

Insbesondere kann die Sensorvorrichtung 300 zum Erfassen einer oder mehrerer auf das Führungselement 240 wirkenden Kräfte (insbesondere in einer Laufrichtung L und/oder quer zur Laufrichtung der Messkluppeneinheit) eingerichtet sein.

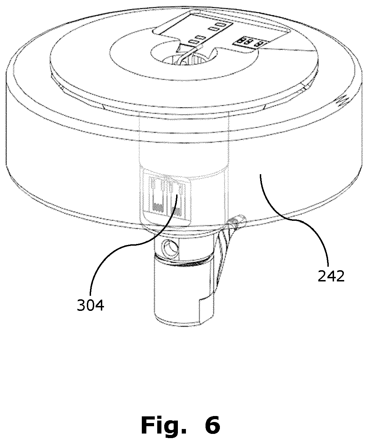

Wie mit Bezug auf Figur 5A dargelegt wurde, umfasst das Führungselement 240 mehrere Führungsrollen 242-248. Wie insbesondere in Fig. 6 dargestellt ist, können an einer Achse der Führungsrollen 242 - 248 Kraftsensoren 304, insbesondere Dehnmessstreifen, angeordnet sein, um Radial- und/oder Axialkräfte auf die Führungsrolle bzw. deren Achse zu erfassen.

Diese Radial und/oder Axialkraftsensoren können Schwankungen in der Normalkraft zwischen dem Führungselement 240, insbesondere den Führungsrollen und einer Führungsschiene, erfassen.

Weiterhin kann die Messkluppeneinheiten 200 zumindest einen Sensor (z.B. Dehnmessstreifen, nicht dargestellt) umfassen, welcher zumindest eine Zugkraft einer geklemmten Materialbahn (insbesondere Folie) auf die Klemmvorrichtung 230 erfasst. Die zumindest eine Zugkraft wird insbesondere über die Führungsrollen 244 und 246 übertragen, welche entsprechende Zugkräfte aufnehmen. Somit kann der Reckprozess überwacht werden.

Ebenso kann (mittels zumindest eines Temperatursensors 302, der hier exemplarisch auf dem Grundkörper 210 angeordnet ist) die Temperatur an der Kluppeneinheit erfasst werden. Ebenso kann auch die Temperatur an den Laufrollen und/oder den Kettengliedern erfasst werden. Hierzu können entsprechende Temperatursensoren an der jeweiligen Messstelle angeordnet werden.

Wie in Figur 5B gezeigt ist, ist die Sensorvorrichtung 300 zur Erfassung einer auf das zumindest eine Kettenglied 220 wirkenden Kraft, insbesondere in einer Laufrichtung L (Kettenlängskraft) und/oder in einer Richtung P quer zu einer Laufrichtung L der Messkluppeneinheit wirkenden Kraft, eingerichtet. Das Kettenglied 220 weist hierzu auf einer ersten Kettenlasche des Kettenglieds (hier der oberen Kettenlasche) einen Kraftsensor 304 auf. Zudem ist auf einer unteren, zweiten Kettenlasche des Kettenglieds 220 ein weiterer Kraftsensor 304 angeordnet.

Insbesondere kann die Außenkontur der Messkluppeneinheiten 100, 200 im Wesentlichen einer Außenkontur einer gewöhnlichen Kluppeneinheit der Reckanlage 10 entsprechen, sodass beim Einbau der Messkluppeneinheiten 100, 200 in die Reckanlage keine weiteren Modifikationen notwendig sind und keine Kollisionen mit anderen Teilen der Reckanlage drohen.

Vorzugsweise weisen die Messkluppeneinheit 100, 200 genauso viele Messerklappen 232 auf wie die in der Reckanlage verwendeten Standard-Kluppeneinheiten 28 (d.h. hier zwei Messerklappen 232). Dies ermöglicht die Materialbahn mit der Messkluppeneinheit auf die gleiche Weise zu klemmen, wie mit einer Standard-Kluppeneinheiten 28, sodass über den Transportweg der Materialbahn eine einheitliche, ordnungsgemäße Klemmung der Materialbahn erfolgen kann. Dies gewährleistet eine realitätsnahe Messung der auf die Materialbahn wirkenden Zugkraft.

### Bezugszeichenliste

- 10: Reckanlage
- 12: Materialbahn
- 14: Ofen
- 16: Antriebssystem
- 17: Führungsschiene
- 18: Einlaufzone
- 20: Auslaufzone
- 22: Zone (Vorheizzone)
- 24: Zone (Reckzone)
- 26: Zone (Wärmebehandlungszone)
- 28: Kluppeneinheit
- 30: Magnet
- 100: Messkluppeneinheit
- 110: Grundkörper
- 112: Klemmfläche
- 114: Kopplungsmittel
- 120: Kettenglied
- 121: Kopplungsmittel
- 122: Kettenglied
- 124: Bolzen
- 130: Klemmvorrichtung
- 132: Messerklappe
- 140: Führungselement
- 142: Gleitelement
- 144: Gleitelement
- 200: Messkluppeneinheit
- 210: Grundkörper
- 212: Klemmfläche
- 220: Kettenaußenglied
- 222: Ketteninnenglied
- 230: Klemmvorrichtung
- 232: Messerklappe
- 240: Führungselement
- 242: Führungsrolle
- 244: Führungsrolle
- 246: Führungsrolle
- 248: Führungsrolle
- 300: Sensorvorrichtung
- 302: Sensor
- 304: Sensor
- 304': Sensor
- 304": Sensor
- 306: Sensor
- 308: Sensor
- 320: Datenspeichereinheit
- 330: Sendeeinheit
- 340: Energiespeicher
- 430: Empfangseinheit
- 435: Kommunikationsverbindung
- 450: Auswerteeinheit
- A: zweite Breite der Materialbahn
- E: erste Breite der Materialbahn
- P: Primärrichtung
- L: Laufrichtung
- R: Abzugsrichtung
- S: Symmetrieebene

## Patentansprüche

1. Messkluppeneinheit (100, 200) für eine Reckanlage, insbesondere eine Quer-, Längs- und/oder Simultan-Reckanlage (10), wobei die Messkluppeneinheit einen Grundkörper (110, 210), zumindest ein Führungselement (140, 240) und zumindest eine Klemmvorrichtung (130, 230) aufweist, wobei
die zumindest eine Klemmvorrichtung (130, 230) am Grundkörper (110, 210) angeordnet und zum Klemmen einer Materialbahn (12) eingerichtet ist; wobei
das zumindest eine Führungselement (140, 240) am Grundkörper (110, 210) angeordnet und dazu eingerichtet ist, die Messkluppeneinheit (100, 200) auf einer Führungsschiene (17) zu führen; und wobei
die Messkluppeneinheit (100, 200) eine Sensorvorrichtung (300) umfasst, die dazu eingerichtet ist Messdaten während des Betriebs der Messkluppeneinheit (100, 200) in einer Reckanlage (10) zu erfassen.

2. Die Messkluppeneinheit (100, 200) nach Anspruch 1, wobei die Sensorvorrichtung (300) eine Datenspeichereinheit (320) zur Speicherung der erfassten Messdaten und/oder eine Sendeeinheit (330) zum drahtlosen Versenden der erfassten und/oder gespeicherten Messdaten umfasst.

3. Die Messkluppeneinheit (100, 200) nach Anspruch 1 oder 2, wobei die Sensorvorrichtung (300) zumindest einen der folgenden Sensoren umfasst:
einen Temperatursensor (302),
einen Kraftsensor (304), insbesondere ein Dehnmessstreifen, oder ein Piezosensor,
einen Beschleunigungssensor (306),
ein Hallsensor (308).

4. Die Messkluppeneinheit (100, 200) nach einem der Ansprüche 1 bis 3, wobei die Sensorvorrichtung (300) zum Erfassen einer auf das zumindest eine Führungselement (140, 240) wirkenden Kraft, insbesondere in einer Laufrichtung (L) und/oder quer zu einer Laufrichtung (P) der Messkluppeneinheit, eingerichtet ist.

5. Die Messkluppeneinheit (100, 200) nach einem der Ansprüche 1 bis 4, wobei das zumindest eine Führungselement (140, 240) ein Gleitelement (142, 144) oder eine Führungsrolle (242, 244, 246, 248) umfasst.

6. Die Messkluppeneinheit (100, 200) nach Anspruch 5, wobei
die Sensorvorrichtung (300) zumindest einen Druckkraftsensor (304), insbesondere einen Piezosensor, umfasst, und wobei
der Druckkraftsensor (304) zwischen dem Grundkörper (110) und dem Gleitelement (142, 144) angeordnet ist, und dazu eingerichtet ist eine Kraft in einer Richtung (P) quer zur Laufrichtung (L) der Messkluppeneinheit (100) zu erfassen, oder wobei
die Sensorvorrichtung (300) zumindest einen Kraftsensor (304), insbesondere einen Dehnmessstreifen umfasst, und wobei der Kraftsensor (304) einer Führungsrolle (242, 244, 246) zugeordnet ist, und dazu eingerichtet ist eine Radialkraft und/oder Axialkraft zu erfassen.

7. Die Messkluppeneinheit (100, 200) nach einem der Ansprüche 1 bis 6, wobei die Sensorvorrichtung (300) dazu eingerichtet ist eine Zugkraft einer geklemmten Materialbahn (12) auf die Klemmvorrichtung (130, 230) zu erfassen.

8. Die Messkluppeneinheit (100, 200) nach einem der Ansprüche 1 bis 7, der Grundkörper (110, 210) weiterhin dazu eingerichtet ist mit einem Kettenglied (120, 220) verbunden zu werden und/oder wobei
die Messkluppeneinheit (100, 200) zumindest ein Kettenglied (120, 122; 220, 222) umfasst, wobei der Grundkörper (110, 120) mit zumindest einem Kettenglied (120, 220) fest verbunden ist, und wobei
die Sensorvorrichtung (300) zur Erfassung einer auf das zumindest eine Kettenglied (120,122; 220, 222) wirkenden Kraft, insbesondere in einer Laufrichtung (L) und/oder in einer Richtung (P) quer zu einer Laufrichtung (L) der Messkluppeneinheit (100, 200), eingerichtet ist.

9. Die Messkluppeneinheit (100, 200) nach Anspruch 8, wobei an dem Kettenglied (120,122; 220, 222) zumindest ein Kraftsensor (304) angeordnet ist, wobei
ein erster Kraftsensor (304) auf einer ersten Kettenlasche des Kettenglieds (122, 222) angeordnet sein kann, und/oder wobei
ein zweiter Kraftsensor (304") auf einer zweiten Kettenlasche des Kettenglieds (122, 222) angeordnet sein kann, wobei das Kettenglied (122, 222) insbesondere ein Ketteninnenglied ist.

10. Die Messkluppeneinheit (100, 200) nach einem der Ansprüche 1 bis 9, wobei die Sensorvorrichtung (300) weiterhin einen Timer umfasst, wobei
die Sensorvorrichtung (300) dazu eingerichtet ist einen zeitlichen Verlauf der Messdaten zu erfassen, zu speichern und/oder zu versenden, wobei
die Sensorvorrichtung insbesondere dazu eingerichtet ist den Verlauf der Messdaten im Betrieb der Messkluppeneinheit zu versenden.

11. Die Messkluppeneinheit (100, 200) nach einem der Ansprüche 1 bis 10, wobei die Sensorvorrichtung (300) dazu eingerichtet ist die Messdaten mit einer Frequenz von zumindest 2 kHz, oder von zumindest 2.5 kHz, oder von zumindest 3 kHz zu erfassen und/oder wobei die
Sensorvorrichtung (300) dazu eingerichtet ist zumindest 4, zumindest 8, zumindest 12, zumindest 16, oder zumindest 32 unterschiedliche Messdaten parallel zu erfassen.

12. Die Messkluppeneinheit (100, 200) nach einem der Ansprüche 1 bis 11, wobei die Sensorvorrichtung (300) eine temperaturbeständige Sensorvorrichtung ist, sodass
die Sensorvorrichtung Messdaten während des Betriebs der Messkluppeneinheit (100, 200) in der Reckanlage (10) erfasst, wobei die Betriebstemperatur der Reckanlage zumindest 200 °C, oder zumindest 300°C oder zumindest 400°C beträgt.

13. Reckanlage (10), insbesondere Quer-, Längs- und/oder Simultan-Reckanlage, mit zumindest einer Führungsschiene (17) und wenigstens einer Messkluppeneinheit (100, 200) gemäß einem der Ansprüche 1 bis 12, wobei die Messkluppeneinheit (100, 200) mittels des Führungselements (140, 240) an der Führungsschiene (17) geführt ist.

14. Reckanlage (10) nach Anspruch 13, wobei
die Reckanlage zumindest einen Magneten (30) umfasst, welcher Magnet (30) im Bereich der zumindest einen Führungsschiene 17 angeordnet ist, und wobei
die Messkluppeneinheit (100, 200) dazu eingerichtet ist, ein Magnetfeld des zumindest einen Magneten (30) zu einem Zeitpunkt zu erfassen, zu welchem Zeitpunkt die Messkluppeneinheit (100, 200) auf der Führungsschiene (17) an dem Magneten (30) vorbeigeführt wird.

15. Reckanlage (10) nach einem der Ansprüche 13 oder 14, wobei die Reckanlage (10) zumindest eine Empfangseinheit (430) umfasst, welche Empfangseinheit (430) dazu eingerichtet ist Messdaten von der Messkluppeneinheit (100, 200) zu empfangen, wobei die Empfangseinheit (430) insbesondere außerhalb eines Reckofens (14) angeordnet ist.

16. Reckanlage (10) nach einem der Ansprüche 13 bis 15, wobei
die Reckanlage (10) unterschiedliche Arten von Messkluppeneinheiten (100, 200) umfasst, wobei eine erste Art zur Erfassung eines ersten Messdatentyps und eine zweite Art zur Erfassung eines zweiten Messdatentyps eingerichtet ist, und wobei sich der erste und der zweite Messdatentyp unterscheiden.

17. Verfahren zur Erfassung von Messdaten in einer Reckanlage, wobei das Verfahren folgendes umfasst:
Anordnen zumindest einer Messkluppeneinheit (100, 200) gemäß einem der Ansprüche 1 bis 12 auf einer Führungsschiene (17) einer Reckanlage (10);
Führen der zumindest einen Messkluppeneinheit (100, 200) entlang der Führungsschiene (17), wobei die Messkluppeneinheit (100, 200) optional eine Materialbahn (12) klemmt;
Erfassen von Messdaten mittels der Messkluppeneinheit (100, 200), und
Speichern und/oder drahtloses Versenden der erfassten Messdaten, wobei das Versenden während und/oder nach dem Führen erfolgt.

18. Verfahren nach Anspruch 17, wobei das Verfahren weiterhin
ein Zuordnen der erfassten Messdaten zu einer Position auf einer Führungsschiene (17) der Reckanlage (10) und/oder
ein Steuern und/oder Regeln der Reckanlage basierend auf den erfassten Messdaten umfasst.
